# EUROPEAN PATENT APPLICATION

(11) **EP 1 767 498 A1**
(43) Date of publication of application: **28.03.2007**
(21) Application number: 05748889.2
(22) Date of filing: 07.06.2005
(51) Int. Cl.: C02F 3/20

(54) **AERATION METHOD, AERATION APPARATUS AND AERATION SYSTEM**

(30) Priority: 08.06.2004 JP 2004198665; 26.01.2005 JP 2005047920
(71) Applicant: Fujisato, Tetsuhiko, Ube-shi, Yamaguchi 755-0024 (JP); Ikeda, Yoshiaki, Ube-shi Yamaguchi 7550039 (JP); Fujisato, Shuukou, Ube-shi, Yamaguchi 7550024 (JP); Imai, Tsuyoshi, Yamaguchi 755-0152 (JP)
(72) Inventor: FUJISATO, Tetsuhiko, 7550024 (JP)
(74) Representative: Harland, Linda Jane
(86) International application number: PCT/JP2005/010435
(87) International publication number: WO 2005/121031

(57) **Abstract**

Provided are an aeration method, an aeration apparatus and an aeration system which allow, in a sewage disposal plant, a nursery for fish and shellfish and a closed water area in an ocean or the lake, the highly efficient dissolution of a gas into the water to be treated and the transfer of the resultant treated water to another place by a water head difference by the use of a conventional apparatus for supplying a gas. An aeration apparatus which comprises an gas spraying section 22 for generating gas bubble particles in the water to he treated 1W, a bubble rise section 3P for allowing a mass of gas bubble particles generated above to move upwards, a passage section 4P for rise of gas bubble particle wherein the above gas bubble particles are pushed up to a position above a water surface and are changed into liquid bubbles, to hereby convert the water to be treated 1W to a liquid film and a liquid bubble transfer section 5P wherein the treated water 2W can be transferred by a water head difference.

## Description

### Technological Field

This invention is concerned with an aeration method, aeration device and aeration system that causes efficient contact of gasses such as air, oxygen etc. in enclosed liquids such as in sewage disposal plant etc.
This invention also concerns itself with an aeration method that via the pressured gas produced by an air pump or blower, causes formation a single liquid bubble [as in a cluster of soap bubbles] in pooled water in a lake, fish nursery, plant or animal cell culture tank, sewage disposal plants etc), thereby turning the pooled liquid into the liquid membrane of the liquid bubble, causing efficient contact between the gas inside the liquid bubble [oxygen, also air etc.] and the pooled liquid [liquid membrane], Also when using air, this does not only function to oxygenate the pooled water, but also achieves a balanced solution of oxygen and nitrogen, providing very habitable water for living things.

### Background Technology

Generally, aeration methods for fish nurseries, plant or animal cell culture tank, dams, sewage disposal plants etc., a variety of which are enumerated below, and to which each has an associated countermeasure.
For example, patent literature item 1 discloses an [Aeration Device] technology that increases the recirculation rate of closed treated water, and improves the refinement efficiency of the air.
For example, patent literature item 2 discloses a [Closed Water Area Purifier and Purification method] technology the boosts aeration through forced liquid flow of stagnant liquid mass in a closed water area through an Ejector, and supplies oxygen through the acceleration of the liquid mass.
However, the since the inventions disclosed in Patent Literature Items 1 and 2 both use gas dissolution methods that rely on increasing the contact area between the liquid and the gas that generates the air bubbles within the liquid, and increasing the contact time between the air bubbles and the liquid etc., they have the following problems: that the solubility of the gas is poor, also that it is not possible to separate aerated treated water and un-aerated treated water, and that even the re-aeration of already aerated treated water is relatively inefficient.

### Disclosure of the Invention

### The Problems the Invention is Attempting to Resolve

This invention deals with situations that have been around for a considerable time. Utilizing the buoyancy of the mass of air bubbles generated by an aerator placed inside the water to be treated, and raising those bubbles into a [bubble progression passage] above the surface of the water, turning those individual bubbles into a liquid bubble, it is possible to thereby turn the water to be treated into the form of the pellicular water surface of the liquid bubble, in which it is particularly easy to dissolve a gas. Also, it is possible to expose for a longer period as a liquid bubble below atmospheric pressure. Also since the overflow point is higher than the water surface, by making use of the water head differential it is possible to separate the bubbled treated water, and the untreated water.
Also, by using an air pump or blower etc. to make compressed air, to act as spraying section within the untreated water it is possible to continuously generate individual bubbles. Using the buoyancy of the generated bubbles, to change the bubbles into to mass of liquid bubbles in the [bubble progression passage] above the surface of the water (as in the formation of soap bubbles), thereby transforming the untreated water into the liquid membrane of the liquid bubbles, and making the dissolution of gas within the untreated water easier, and also vice-versa, making the expulsion of excess gas from the untreated water easier.
Due to this operation, it is possible to regenerate poorly balanced water, in which the quantity of nitrogen is too high as a result of living organisms consuming only oxygen; furthermore, since the liquid bubble generated is in a position above that of the water surface, it is possible to transfer the treated water to the desired location.
In other words, the objective of this invention is to provide an aeration method, an aeration device,and aeration system which can provide the high efficiency dissolution of gas, without needlessly using energy to re-aerate treated water that can operate whilst conserving energy.

### Method of Resolving the Problem

This invention claims an aeration method in Claim 1 that has a spraying process of generating individual air bubble particles underwater; that also has a air bubble combination process that combines those above mentioned air bubble particles when they rise above the water by forming them into a mass of bubbles particles as the air bubble particles collect underwater; that also has a liquid bubble generation process, that by having an air bubble progression part that sits above the water surface of the above mentioned mass of air bubble particles, and using the buoyancy of the above mentioned mass of air bubble particles, allows the above mentioned mass of air bubbles to rise up into the above mentioned air bubble progression part, separating the liquid near the air bubbles downwards by the force of gravity, and converting the liquid near the top of the above mentioned air bubble progression part into a liquid bubble (as in a soap bubble); and that has a liquid bubble exposure process that holds the liquid bubble for a long time as it is, at the topmost part of the above mentioned air bubble progression passage.
An aeration method with this kind of composition has the effects outlined below.
(1) If the spraying process can generate air bubbles, it can operate even at a shallow position of roughly 20cm under the surface of the water or greater, without requiring a high power consumption high pressure air pump
(2) Since it has an air bubble combination process, it can form a mass of air bubbles under the water surface, allowing the creation of the buoyancy to raise the air bubbles above the surface of the water.
(3) Since it has a liquid bubble generation process that uses gravity to separate the liquid near the air bubbles that are rising above the surface of the water, making it possible to convert the air bubbles into liquid bubbles.
(4) Since it has a liquid bubble exposure process that exposed the liquid bubbles in the condition they overflowed (pellicular water) to pressure below atmospheric pressure for a long time, the diffusion rate is increased. Also, since bubbles are in a position above the water surface, it is possible to recover the treated liquid, and using the liquid head differential to, it is possible to move the treated water to a different location.

The invention in Claim 2 claims an aeration device that has a spraying component that generating individual air bubble particles in the untreated water; that also has a air bubble combination component that collects those above mentioned air bubble particles in the bottom of the above mentioned untreated water, forming them into a mass of air bubbles; that also has a an air bubble progression part that, using the buoyancy of the continuously increasing above mentioned mass of air bubble particles, allows the above mentioned mass of air bubbles to rise up above the surface of the water from the top of the mass, converting the above mentioned air bubbles into a liquid bubble; and that has a liquid bubble exposure component that holds the liquid bubble for a long time in the condition it is in as it overflows from the topmost part of the above mentioned air bubble progression passage.
An aeration device with this kind of composition has the effects outlined below
(1) If the spraying component (air stone etc) can generate air bubbles, it can operate even if installed in shallow position of roughly 20-30cm under the surface of the untreated water, and it will also have excellent energy efficiency.
(2) With the air bubble combination component, it can collect the generated air bubbles under the water surface at the bottom of the water, creating a large amount of buoyancy. Also, it is possible to concentrate the buoyancy into a narrow combination area.
(3) Since it has an air bubble progression passage that, using the buoyancy of the continuously generated and increasing mass of air bubbles, has the liquid in the region of the air bubbles that pull up and pulled apart by gravity, it can convert the air bubbles into a liquid bubble mass.
   It this fact that allows the untreated water to ultimately become the pellicular water surface of the liquid bubble, and being largely under atmospheric pressure, is in an excellent condition for gas diffusion.
(4) Since it has a liquid bubble exposure component, the liquid liquid bubbles are exposed in that condition (pellicular water) to pressure below atmospheric pressure for a somewhat long time, the diffusion rate is increased. Also, since the overflow occurs in a position above the water surface, it is possible to recover the treated liquid, and using the liquid head differential to it is possible to move the treated water to a different location, and finally it is possible to conduct other treatment as well.
(5) For example, in untreated water that has excess of oxygen due to the microbes or animals existing inside the untreated water where only the nitrogen dissolved in the untreated water is consumed, it is possible to regenerate the water to treated water that is suitable for microbes or animals, by turning the untreated water into the pellicular surface water of a liquid bubble, below atmospheric pressure, restoring the balance of the dissolved concentration of nitrogen and oxygen gasses.

And the invention in Claim 3, claims an aeration device which, by means of the bubbles generated by installing the above mentioned spraying component inside the top of a circulation component that points from the base of the untreated water to the top, which is installed in the aeration device in Claim 2, pulls up the bottom of the untreated water towards the top via an air-lift effect, that finally turns this untreated water into the pellicular surface water of a liquid bubble, below atmospheric pressure.
The aeration device in this invention has the effects outlined below in addition to the effects of those noted in Claim 2
(1) With the only the energy to produce the air bubbles inside the top of the circulation component , it is possible to pump the anoxic water at the bottom to the top, and oxygenate it, also, it can promote convection between the top and bottom of the water.

Furthermore, the invention in Claim 4, claims an aeration device which, by using the water head differential of the liquid forced out the above mentioned liquid bubble exposure component, described in Claim 2, that is positioned above the water surface, and connecting it to a transfer component that connects it to the bottom section of the water, supplies treated oxygenated water to the bottom section.
The aeration device with the above composition, has the effects outlined below in addition to the effects of those noted in Claim 2
(1) Since the treated water continuously forced out the bubble exposure component is higher than the surface of the water, using the water head differential it is possible to move the treated water to a different location
(2) Just by supplying the treated water to the inside of the transfer component that is connected to the bottom, it is possible to crop the treated liquid through the transfer component by its own weight, and by this means, it is possible to deliver oxygenated treated water to the bottom without consuming energy.

The invention in Claim 5, claims an aeration device system which, has the aeration device noted in Claim 2 installed above the water surface and, a fine air bubble generator installed at the base of the above mentioned aeration device and, a receiver that catches the treated water that overflows from the above mentioned aeration device's liquid bubble exposure component and directs it elsewhere where it can be treated.
The aeration device system in this invention has the effects described below.
(1) Since the fine air bubbles generated by the fine air bubble generator installed at the bottom of the aeration device stick to pollutants that float in suspension in the water or pollutants that pile about the bottom, which increases the buoyancy of the pollutants, it is possible to cause the pollutants to float upwards towards the surface of the water.
(2) Due to the rising current of the air bubbles produced by the spraying component in the aeration device, the rising pollutants are sucked in and moved along, until finally the pollutants and air bubbles are carried up through the bubble progression passage and spilled out of the liquid bubble exposure component.
(3) The receiver, using the water head differential between the water surface, can stove the treated water and pollutants that spill out of the liquid bubble exposure component to another location.
(4) By this means, it is possible to separate pollutants within untreated water, and also to conduct any desired sort of treatment.

The invention claimed in Claim 6, claims an aeration device system which has: a tank capable of withstanding increasing pressures and decompression; a pump that is capable of supplying the above mentioned tank with both gas and untreated water whether the above mentioned tank is under increasing pressure or decompression; a liquid bubble generation vessel that can produce liquid bubbles from the above mentioned untreated water; an air pump that can suction and deliver the gas from the tank during both increasing pressure and decompression conditions to the sprayer component installed at the base of the above mentioned liquid bubble generation vessel; a receiving pipe inside the above mentioned tank with a multi-stage vertical arrangement, whereby the top stage receives the treated water that spills out of the above mentioned liquid bubble generation vessel, and the bottom stage has an intake tube that draws water into the above mentioned bubble generation vessel,
The aeration device system in this invention has the effects described below.
(1) Since it has a tank that can withstand both increasing pressure and decompression, it is possible to quickly increase the pressure of the inside of the tank by supplying a compressed gas from the discharge side of a compressor for example, and also, it is possible to decompress the inside of the tank by attaching a vacuum pump or the intake side of a compressure to the top of the tank.
(2) Through this, if air bubble particles are generated by suctioning the high pressure gas in the tank through an air pump and out the spraying component, it is possible to create a liquid bubble that has high pressure gas inside, and by dissolving gas that is at the same pressure as in the pellicular water of the liquid bubble surface, it is possible to create high concentration gas soluble water. Also, when the tank is in decompressed state, if air bubbles are generated by suctioning the low pressure gas in the tank through an air pump and out the spraying component, it is possible to create a liquid bubble that has low pressure gas inside, and since the gas that is dissolved in the pellicular water of the liquid bubble surface equalizes to the low pressure and is released into the space inside the liquid bubble, it is possible to create de-aerated water.
(3) Since it is possible to take the high concentration gas soluble treated water, or the de-aerated water that overflows from the liquid bubble generation vessel installed in the top stage of the tank, and turn it into liquid bubbles inside the liquid bubble generation vessel at the bottom stage, twice or multiple times, even if the solubility or de-aerability of the gas is poor due to, for example heat or viscocity etc., it is possible to request the desired value treated water.

The invention claimed in Claim 7, claims an aeration device which has: a spraying component which, using an air pump or a blower, supplies the untreated water with high pressure gas, and produces air bubble particles; a bubble rising component which, by installing the above mentioned spraying component into a cylinder, has a mass of air bubble particles rise through the inside of the cylinder; an air bubble progression passage which, provides a tube attached to the top of the above mentioned bubble rising component, as a bundle of cylinders, that by increasing the buoyancy of the above mentioned mass of air bubble particles, pushes the mass above the surface of the water, converting it into a liquid bubble mass (as in a soap bubble), converting the untreated water into a liquid membrane; a liquid bubble transfer component that can transfer the liquid bubble in its original state.
The aeration device in this invention has the effects described below.
(1) Since the spraying component (airstone etc.) is installed in the base of the air bubble rising component, it is possible to focus all the buoyant energy of the produced air bubble particles into the air bubble progession passage.
(2) Since the liquid around the air bubbles that rise up the air bubble progession passage is pulled apart by gravity, the mass of air air bubbles that has risen near the top of the air bubble progression passage is converted into a mass of liquid bubbles (as in a soap bubble) Through this fact, the untreated water is converted into a liquid membrane.
(3) Since it is possible to adjust the depth of the bottom of the liquid bubble transfer component (the treated water egress part) while it its dipped in water, it is possible to control the condtion for liquid bubble generation in the liquid bubble transfer component.
(4) Since the liquid transfe component is above the surface of the water, it is possible to transfer the treated water to a different location by the water head differential.

The invention claimed in Claim 8 claims an aeration device which: furnishes the aeration device named in claim 7 with the closure of the upper aperture of the above mentioned liquid bubble transfer component, and an air suction hole for the purpose of circulating the air by suctioning it out of the inside through an air pump or a blower, and an air regulation valve that can regulate the pressure inside the aeration device; and finally, has a liquid bubble receiving component at the lower aperture of the above mentioned liquid transfer component that receives the above mentioned liquid bubbles as they are about to hit the water and rupture.
(1) Since it has an air suction hole, it is possible to suction out the air for which the production costs have already been incurred, via an air pump or a blower, without releasing to the atmosphere and supply it a second time to the spraying component (air stone etc.).
(2) Since it has an air regulation valve, it is possible to achieve an appropriate pressure inside the aeration device for liquid bubble generation, by expelling little gas while adjusting.
Also, it is possible to use it as an outlet valve for unused gas that is discharged from inside the untreated liquid.

The invention claimed in Claim 9, claims an aeration system which: has an aeration device assembly that is uses a series of aeration devices, each aeration device has a spraying component that produces air bubble particles underwater close to the water surface in the aeration of a sewage treatment plant etc., a conical air bubble combination component that. collects the produced above mentioned air bubble particles in its top part; an air bubble progression passage which provides a tube attached to the top of the above mentioned bubble combination component as a bundle of cylinders, that by increasing the buoyancy of the above mentioned mass of air bubble particles, pushes the mass above the surface of the water, converting it into a liquid bubble mass (as in a soap bubble), that can convert the untreated water into a liquid membrane, the configuration of the assembly is such that the attached to the bottom of the conical parts of the above mentioned air bubble combination components are attached without a gap; and a guide wall that, using the water head differential from the overflow of treated water from the above mentioned aeration device assembly, can transfer the treated water to the bottom layer of the above mentioned sewage treatment plant etc.
(1) Since the bottom of the conical parts air bubble combination components are concatenated together, it is possible to completely separate the untreated water at the bottom of the aeration device from the treated water at the top of the aeration device; therefore, the applying additional energy to treated water will not occur.
(2) Since it is fine to place the spraying component that is installed in the untreated water underwater near the water surface, even if the energy capacity of the air pump or blower etc., is low, it will still work.
(3) Since it is furnished with a guide wall, using the water head differential, it is possible to have the oxygenated treated water descend following the wall, automatically delivering oxygenated treated water to the bottom of the sewage treatment plant etc.

### Effects of the Invention

With regards to the aeration method in Claim 1, and the aeration device in Claim 2, they have the effects outlined below:
(a) Regarding the underwater liquid-gas contact of the air bubble particles produced from the spraying process (spraying component) in this method, although they are only temporarily underwater in the air bubble combination process (air bubble combination component), since they are retained in the state of a mass of air bubble particles, the efficiency is good. Also, since those air bubbles particles are converted into liquid bubbles by the liquid bubble generation process (air bubble progression component), consequently turning the untreated water into the pellicular water membrane of the liquid bubble, which is easily air soluble, they are an aeration method and aeration device of excellent energy efficiency.
(b) Also, since the spraying process (spraying component) that is installed underwater can generate liquid bubbles even when installed at a shallowness of 20-30cm underwater, the pressure energy required to deliver gas to the spraying process (spraying component) can he small, making it have excellent energy conservation properties.
(c) Since the treated water that overflows in the state of a liquid bubble from liquid bubble exposure method (liquid bubble exposure component) is higher than the water surface, using this water head differential, it is possible to not add further energy aerating treated water, also, it is possible to transport treated water to a different location, making this an economical way to efficiently oxygen enrich untreated water. Also, since it is possible to transfer treated water to a different location, it is possible to conduct the any further type of desired treatment, giving it excellent control properties and generality,
(d) Regarding the holding of pellicular water of the liquid bubble membrane in a state below atmospheric pressure, it is not only an excellent state for the solubility of gas mentioned above in (a), but also for enclosed water areas, where, due to the inhabitation of a lot of microbes and living organisms, only oxygen is consumed, resulting in terrible water quality, wherein the diffusion balance between oxygen and nitrogen is ruined, By turning water of this water quality, into the pellicular water of a liquid bubble membrane, and exposing it below atmospheric pressure, the diffusion balance between oxygen and nitrogen is achieved, making possible to achieve ideal water quality for microorganisms and animals.

Also, with regards to the aeration device invention in Claim 3, it has the effects outlined below:
(a) It is possible to, using the same amount of energy as the aeration device in Claim 2, in lakes, marshlands and ocean for example, simultaneously suck up the untreated water from the bottom and supply it with oxygen and promote convection between the top and bottom, creating an ideal environment for the entire ecosystem of the water area.

The aeration device invention in Claim 4, can demonstrate the effects outlined below:
(a) Since the oxygen enriched treated water is discharged above the surface of the water, and is directly delivered to the oxygen deficient water at the bottom, by its own weight, it is possible to create an ideal environment for an ecosystem, in lakes, marshlands or ocean.

Also, the aeration system invention in Claim 5, accomplishes the effects below.
(a) By adhering fine air bubbles to the suspended pollutants, pollutants that silt at the bottom, surplus feed, excrement etc., in the water area of a nursery etc., it is possible to increase the buoyancy of the pollutants and suspended matter, causing them to float up to the water surface, and, with the air bubbles generated from the spraying component raise the pollutants and suspended matter through the air bubble progression passage, and overflowing them at the same time with the treated water through the liquid bubble exposure component, through the receiving component, it is possible to collect and remove suspended mater and pollutants, and also bio-oxidize microbial treatment tanks, making it possible to maintain ideal water quality for an ecosystem.
(b) It is possible to collect and remove suspended matter contained in the circulation water of factories etc.

The aeration system in claim 6 accomplishes the effects below:
(a) It is possible to produce high concentration gas diffused water that matches the gas pressure inside a tank, with excellent operational, control, and economic characteristics.
(b) Also, it is possible to produce de-aerated treated water that matches the low pressure inside a tank, with excellent operational, control, and economic characteristics.
(c) Since it is possible to continuously reuse the energy to produce the pressure or decompressed condition inside a tank within a multistage bubble generation vessel, it has excellent energy efficiency.
(d) As a result, even with water quality or gas that is difficult to dissolve gas or de-aerate, by continuously reusing the above mentioned energy, it is possible to efficiently treat the water.

Also, the aeration device invention claimed in Claim 7 has the following effects:
(a) Since the installed spraying component (an air stone etc) is installed just underneath the surface of the water, it can work with a low static pressure air pump or blower etc. and has excellent energy conservation properties.
(b) Since the air bubble raising component, the air bubble progression passage and the liquid bubble transfer component use cylindrical and conical parts, it can be manufactured small and compactly, and has excellent handling properties.
(c) Since the liquid in the region of the air bubbles that rises through the air bubble progression passage is separated downwards due to gravity, it is possible to convert the untreated water into the pellicular water liquid bubble membrane, which is a easily gas soluble state, it has excellent efficiency, and energy conservation properties.

With aeration device invention claimed in Claim 8, it is possible to demonstrate the following effects:
(a) Since it has an air suction hole, it is possible to suction out the air for which the production costs have already been incurred, repeatingly suctioning it, and causing it to circulate, reducing waste to a minimum, it is exceedingly economical.
(b) Since it has an air quantity control valve, it is possible to finely control the pressure inside the aerator, and provide optimal conditions for liquid bubble generation.

Also, the aeration device system claimed in Claim 9 has the following effect.
(a) Since a series of aeration devices are connected together without a gap, it is possible to completely separate the untreated water at the bottom of the aeration devices, from the treated water at the top of the aeration devices; there is no additional aeration energy added to treated water, and it has excellent energy conservation properties, and is exceedingly economical.
(b) Regarding the energy used to deliver gas to the spraying component, it is possible to plan for efficient and good use of energy required to deliver gas underwater -just under the water surface.
(c) Since the treated water, which is oxygen enriched by the generation of liquid bubbles, and through the water head differential, follows the guide wall, delivering it to the unoxygenated bottom regions of a water area, causes the micro organisms to activate, it is possible to increase purification capacity for sewage.
(d) Since the aerator has a simple structure, it is possible to cheaply construct concrete types, metal form types etc. Also, it is possible to use recycled plastic to manufacture the device.
(e) There is no reason to materially change the basic construction of existing sewage treatment plants, and it is simple to install, and it has excellent maintainability and is exceedingly economical.

### A Simple Explanation of the Figures

Figure 1. A schematic diagram of the first realization of the form of the Aeration Device, the top is an elevation diagram, the bottom a side view.
Figure 2. A schematic diagram demonstrating the movement of the air bubble particles and the liquid bubbles of the when the first realization of the form the Aeration Device is operating.
Figure 3. A schematic diagram of the first realization of the form of the aeration device, the fine bubble generation vessel M, the bio-treatment tank (B.R), in the combined operational state.
Figure 4. A schematic diagram showing the movement between the fine bubbles M.B. and pollutants F, inside B.R and the area of B.F of Figure 3, in (a) and (b) respectively.
Figure 5. A schematic diagram of an aeration device that uses the air lift effect with an aeration device of the first realization of the form, the air bubble particles 2a produced by the spraying component 2, installed inside the rising pipe 7.
Figure 6. A schematic diagram showing the possibility of transporting the treated water 2W to a different location by means of the water head differential of the treated water discharged from the first realization of the form of the aeration device.
Figure 7. (a) is a schematic diagram of the lower end of several of the air bubble combination components the first realization of the form of the aeration device, connected together, the top is an elevation the bottom is a frontal diagram. Also, (b) is a schematic diagram of the floating type aeration device, the top is an elevation, and the bottom is a frontal diagram.
Figure 8. A table of values of the quantity of treated water 2W, obtained by changing, with regards to the liquid bubble generation aeration device 1, shown in figure 2, using tap water, the depth between the water surface and the spraying device, and the distance from the water surface and the liquid bubble exposure component.
Figure 9. A table of measurements of overall oxygen diffusion quantities with regards to the liquid bubble generation aeration device 1, shown in figure 2, also a table of measurements of overall oxygen diffusion quantities with regards to aeration simply by the spraying component.
Figure 10. A frontal diagram of aeration system that is the second realization of form of this invention
Figure 11. A schematic diagram showing instantaneous solution, and dearation of the pellicular water of liquid bubble membrane WF, in response to increasing interior tank pressure P, and decompressing pressure -P, in (a) and (b) respectively.
Figure 12. A frontal cross-section diagram of the aeration device of the third realization of the form of this invention.
Figure 13. A schematic diagram, showing the behavior of the air bubble particles and liquid bubbles when operation the aeration device of the third realization of the form.
Figure 14. A schematic diagram of the fourth realization of the form of the aeration device.
Figure 15. (a) Is a frontal cross sectional schematic diagram of the fifth form of the realization, the aeration system that has the aeration device 1M, comprised of the buttom part 3a, of several aeration devices, connected seamlessly together.
   (b) Is a frontal cross sectional diagram of the aeration device 1M, installed in the top part of the treated water of a sewage treatment plant.
   (c) Is a side cross sectional diagram of the appearance of the treated water 2W, following the guide wall Wa, and decending.
   (d) ls an eleveation diagram of that.

### Marks Explanation

1 Aeration Device
1 P Aeration Device
2 Gas Spraying Component
2a Gas Bubble Paricals
2bGas Supply Tube
3 Gas Bubble Combination Component
3a Mass of Gas Bubbles
3b Stay
3P Bubble Progression Component
3A Base of the Bubble Combination Component
4 Bubble Progression Passage
4a Changed Liquid Bubble
4A Honey Comb Shape
4B Pipe Shape
4PBubble Progression Passage
4P1 Pipe Tube
4P2 Pipe Shape Portion
5 Liquid Bubble Exposure Component
5a Overflowed Liquid Bubble
6 Receiver Plate
6PLiquid Bubble Receiving Plate
7 Rising Pipe
7PGas Suction Hole
8 Descending Pipe
8P Air Pump I Blower
9P Gas Supply Valve
10P Gas Volume Adjust Valve 1 1 Aeration System
12 Tank
12a Disposal Adjust Valve
12b Depressurize Valve
12c Recycle Valve
12d Pressure Meter Sensor
12e Excess Gas Disposal Valve
13 Pump
13a Suction Tube
13bGas Self-Suction Volume Adjust Valve
13c Supply Valve
13d Liquid Self-Suction Volume Adjust Valve
14 Supply Pipe
15 Liquid Bubble Generating Vessel
16 Air Pump
16a Air Suction Tube
16b Air Supply Tube
17 Receiving Plate Tube
18 Vacuum Pump
19 Recycle Pump
20 Water Level Sensor
22 Gas Spray Component 32 Gas Spray Component
33 Gas Bubble Combination Component
34 Gas Bubble Progression Passage
A Atmospheric Pressure X Gas
2X Discharge Gas
SW Water Surface
AL Distance from Water Surface to Gas Spraying Component 2
BL Distance from Water Surface to Liquid Bubble Exposure Component 5 /Distance from Water Surface to the top of the Gas Progression Passage 4P
K Gap between the inner walls of the Gas Progression Passage 4
1 M Aeration Device by connecting multiple Gas Bubble Combination Component (3)'s Bases (3a)
UV Lamp
1W Untreated Water
2W Treated Water
3W High Treated Water
Wa Guide Wall
WF Film Water or Water film around the liquid bubble
B.R Motion of pollutants in a bioreactor tank
B.P Motion of pollutants in the untreated water 1W
P.W Pressurized Air and Liquid mixing water
P Air pressure
P De-pressure
Q Treated Water Flow
R.W Water flow direction in a sewage disposal plant
M Fine Air Bubble Generator
B.M Fine Air Bubble
F Pollutant
H Tank Partition Wall
FL Floatation
Y Up-limit Water
Z Low-limit Water
h Top Opening
g Bottom Opening

### Optimal Form of Realizing the Invention

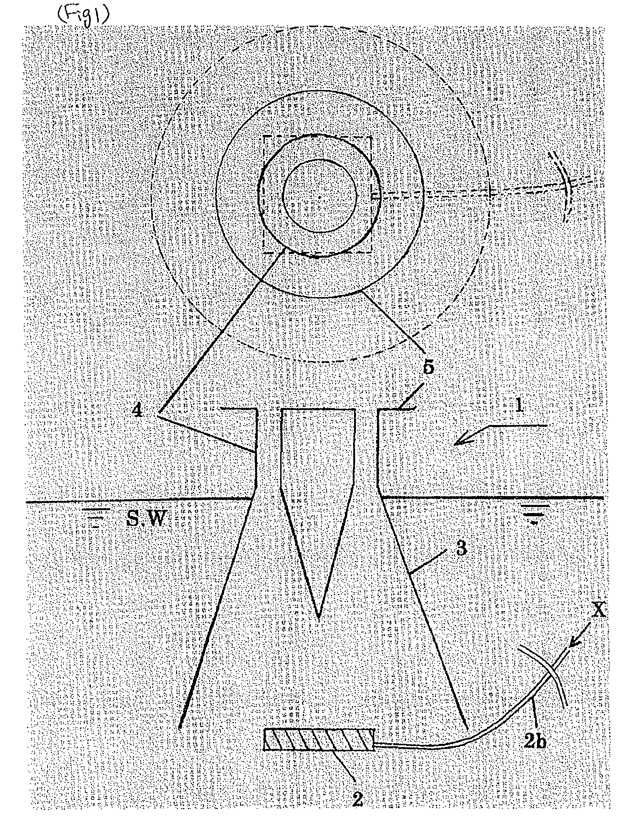

Below, the explanation of the forms of the realization of the aeration system and aerator contained in this invention will be based on figures 1 through 15.
Figure 1 is a schematic diagram of the first realization of the form of the Aeration Device, the top is an elevation diagram, the bottom a side view.
Within Figure 1, 1 is the Realized Form 1 of the Aeration Device, 2 is the spraying component, 2b is the air supply tube which supplies air to the spraying component 2, 3 is the air bubble combination component which collects the air bubble particles generated by the spraying component 2, 4 is the air bubble progression passage which causes the collected air bubble particles to rise up over the water surface S.W, 5 is the liquid bubble exposure component which holds the liquid bubbles produced from inside the air bubble progression passage 4 for a long time below atmospheric pressure, X is the pressurized air.
An explanation of the method of operation of Aeration Device 1 in the first form of the realization.
Firstly, in figure 1, by supplying air X to the spraying device 2, from an air pump etc., through air supply tube 2b, air bubbles particles are continuously generated at the base of air bubble combination component 3. Those air bubble particles rise up due to buoyancy, however, since they are converging inside the top of the air bubble combination component 3, the produced air bubble particles are unable to rise up at once, and are formed into a mass of air bubbles within the air bubble combination component 3.
That mass of air bubbles, by the combined buoyancy of that produced from spraying component 2, that rises accelerating towards the water surface, and that of the air bubble mass, can rise up into the air bubble progression passage 4, attached above the water surface.
By being able to separate downwards the liquid around the air bubbles by gravity when they rise, the air bubble particles can be converted into a cluster of liquid bubbles at the top of the air bubble progression passage 4, then, overflowed in from the lop as a liquid bubble (pellicular water) and by being able to hold them for a slightly long time below atmospheric pressure in the liquid bubble exposure component 5, it is possible to obtain treated water with a high dissolved oxygen content, that has a balanced solution between oxygen and nitrogen.

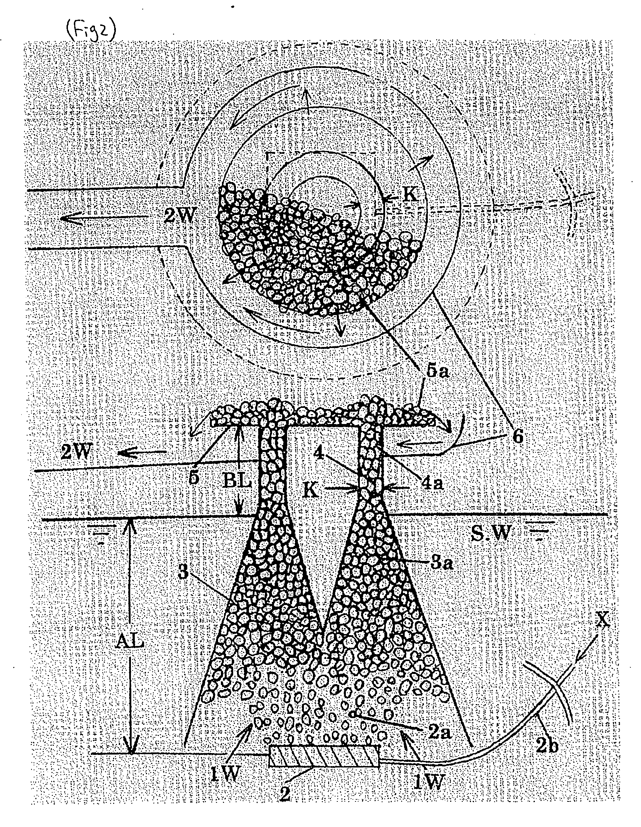

Figure 2 is a schematic diagram demonstrating the movement of the air bubble particles and the liquid bubbles of the when the first realization of the form the Aeration Device is operating, and 1W is the untreated water, 2a are the air bubble particles generated from the spraying component 2, 3a is mass of air bubbles inside the air bubble combination component 3, 4a is liquid bubble converted from the air bubble particles that rise above the water surface S.W into the air bubble progression passage 4, 5a is the state of the liquid bubbles that overflow and are held for a slightly long time. 6 is the receiving plate that allows the treated water 2W which overflows at a higher position than the water surface S.W, to be moved to a different location by the water head differential.
Furthermore, within this diagram, the distance from the water surface S.W to the top of the air bubble progression passage 4P is shown as BL, and the distance from the spraying component 2 to the water surface S.W is shown as AL. Also, K is the inside diameter of the air bubble progression passage 4.

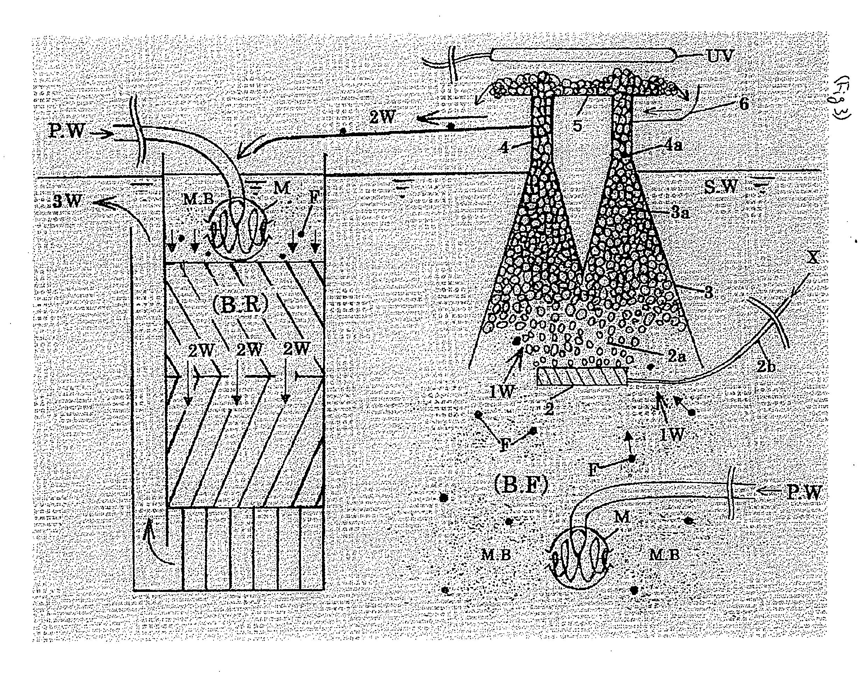

Figure 3 is a schematic diagram of the first realization of the form of the aeration device, the fine bubble generation vessel M, the bio-treatment tank (B.R), in the combined operational state. By generating fine air bubbles M.B. inside the untreated water 1W, from the fine bubble generation vessel M, shown at the bottom right of the figure, and using the flotation effect feature of the fine air bubbles M.B, causing the fine bubbles to adherer to suspended pollutants and pollutants accumulating at the bottom F, the increased buoyancy will cause the pollutants F to rise to the water surface.
As a result, it is possible to combine the air bubble particles 2a produced from the spraying component 2, and the rising pollutants F inside the air bubble combination component 3, allowing them to rise in the air bubble progression passage 4, then the pollutants F that overflow from the liquid bubble exposure component 5 will be delivered from the receiving plate 6 to the bio-treatment tank B.R.
In another utilization of the features of fine air bubbles M.B, within downward flowing water current, by adhering the fine bubbles M.B to pollutants F, adding buoyancy to the pollutants F and opposing the downward water current, it is possible to cause only the pollutants F to gently descend.
In the left hand side of the figure, inside the bio-treatment tank B.R, this above mentioned feature is utilized; a fine bubble generation'vessel M is installed at the top, and in the downward flowing side, the bio treatment vector is loaded, and a bio-film composed of microorganisms such as bacteria, algae, and protozoa is formed. As a result, the contact time between the pollutants F and the bio-film is increased, and even with a small scale bio treatment tank B.R efficient bio oxidation treatment is possible, and is discharged as super treated water 3W.
Also, when sterilization of bacteria etc. that are contained in treated water 2W by using an ultraviolet ray tube is desired, if an ultraviolet lamp uv is installed in the top of the liquid bubble exposure component 5, then it is possible to effectively expose the bacteria etc. to ultraviolet rays, since the treated water 2W is the pellicular water of the liquid bubble membrane. Furthermore, when pollutants F have non-biodegradable elements, replacing the bio treatment tank B.R in the diagram with a recovery and disposal device will produce a good aeration device system, one that has been stated in Claim 5.
The fine bubble generation vessel M in this diagram is of a rotating type, P.W is the pressured water air mixture.

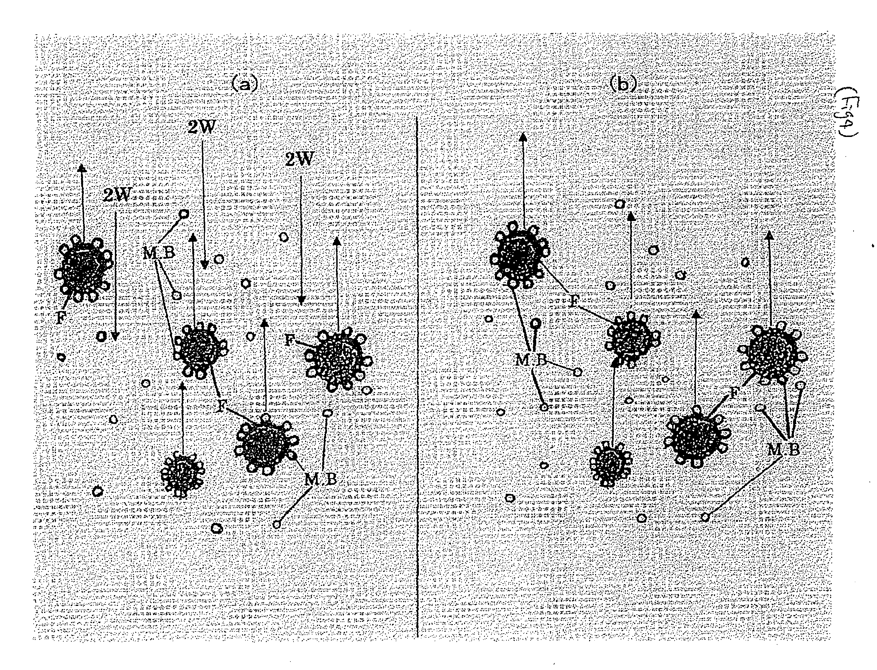

Figure 4 is a schematic diagram showing the movement between the fine bubbles M.B. and pollutants F, inside B.R and the area of B.F of Figure 3, in (a) and (b) respectively. In Figure 4 (a) the fine air bubbles M.B that are produced from the fine air bubble generator M stick with the pollutants F that is transferred together with the treated water 2W continuously from the receiving plate 6. Since the difference speed between treated water 2W flow and the pollutant rising speed and compared with the downside speed of the treated water 2W, the pollutant rising speed increases due to increasing buoyancy thus make the pollutant stay around the bio filter longer and also increase the contact time between the pollutant and the bio filter.
On the other hand figure 4 (b) shows the condition of the fine air bubbles M.B generated by the fine air bubble generation vessel M that is installed in the untreated water 1 W in figure 3, adhering to the pollutants F in the untreated water 1W, and by increasing the buoyancy, heading towards the air bubbles particles 2a, generated by the spraying component 2.

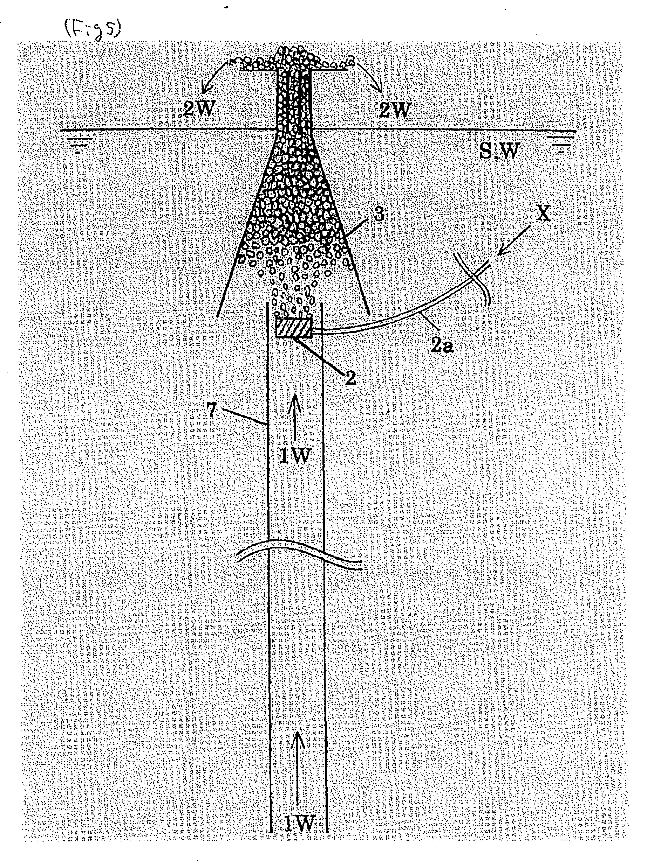

Figure 5 is a schematic diagram of an aeration device stated in Claim 3, that uses with an aeration device of the first realization of the form, and due to air lift effect of the air bubble particles 2a produced by the spraying component 2, installed inside the transfer component, rising pipe 7, the untreated water 1 W at the base of the water area, is raised up from the rising pipe 7, converting the untreated water 1 W at the base of the water area, into a liquid bubble.
Furthermore, the air bubble combination component in figure 5 is installed within the top of the rising pipe in this realization of the form, however, it is fine to operate with the air bubble combination component 3, connected to the top of rising pipe 7.

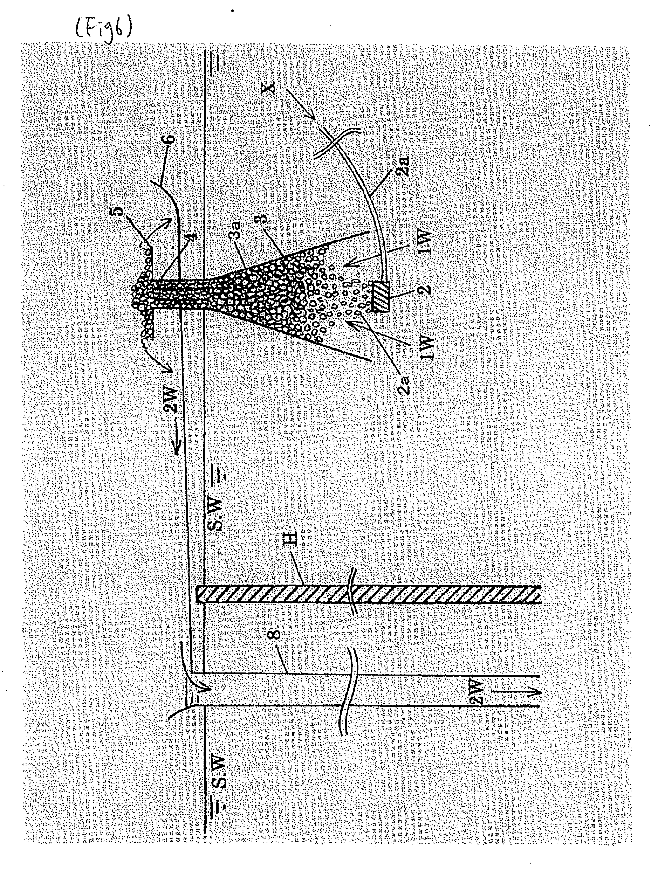

Figure 6 is a schematic diagram showing the possibility of transporting the treated water 2W to a different location by means of the water head differential of the treated water 2W discharged from the first realization of the form of the aeration device.
In this figure, the air bubble particles 2a that are generated by the spraying component 2, become a mass of air bubbles 3a inside the air bubble combination component 3, and with the buoyancy of the air bubble particles 2a continuously produced by the spraying component 2, and the buoyancy of the mass of air bubbles, it is possible to raise the mass of air bubbles 3a from the top, up higher than the water surface S.W and convert them into a liquid bubble.
By this means, the untreated water 1 W around the air bubble particles 2a, becomes the pellicular water liquid bubble membrane WF, in the upper region of the air bubble progression passage 4, and overflows out from the liquid bubble exposure component 5 to the receiving plate 6 as treated water 2W. Furthermore, the general idea of pellicular water WF is shown in diagram 11 a, b.
The treated water 2W that flows around receiving plate 6 passes over the tank bulkhead H, and is sent to another tank, and is sent through a transfer component, a descending pipe 8, that is connected to the bottom, where it descends in pipe 8 under its own weight. The realization of this form concerns that aeration device stated in Claim 4.

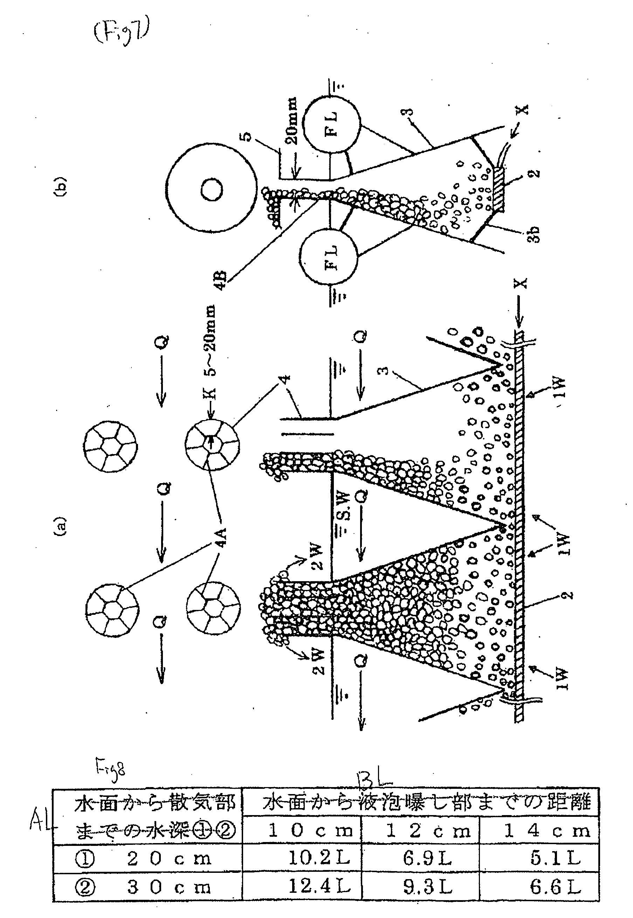

With regards to Figure 7 a, the part at the top, with 4 circular honeycomb shaped air bubble progression passages 4, and the flow direction Q is stated, is an elevation diagram, the part at the bottom is a frontal diagram. By seamlessly connecting several of the air bubble combination components 3 together at the bottom, it is possible to capture all the air bubble particles generated by the spraying component 2 inside several bubble combination components 3, as a result, a great quantity of the untreated water 1 W can be converted to liquid bubbles and treated.
Also, since the bottoms of the air bubble combination components 3 are connected, there is no mixture between the untreated water 1W and treated water 2W, and it is possible for example, to have the flow of treated water set to Q, for purposes of retrieval or transport.
With regards to 7(b), the top is an elevation diagram and the bottom a frontal diagram of a floating type aeration device that can simply aerate liquid bubbles, by using stays 3b and affixing the spraying component 2 to the air bubble combination component 3, also, by affixing it in a location that will allow the optimal bubbles to be obtained from the liquid bubble exposure component 5, and by attaching floats to the air bubble combination component.
Furthermore, with regards to the air bubble progression passage 4, the construction is not only a donut shape like that in figure 1, but can be a honeycomb shape like in figure 7 4A, or a bundle of pipes, also, in areas where an evenly disturbed water surface is not maintained, a liquid bubble aeration can also be generated.

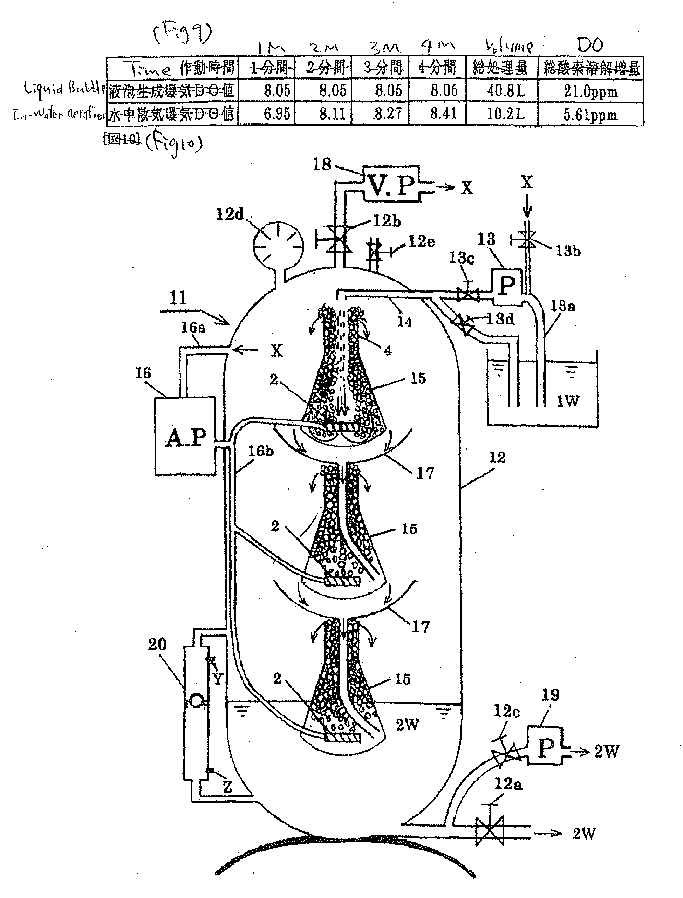

Figure 8 is a table showing the quantity of treated water 2W recovered from the liquid bubble exposure component 5, over an elapsed time of 1 minute, when using tap water, the liquid bubble generation aeration device 1, the method of operation stated in figure 2, and a spraying component 2 that is of a tempered dispersion vessel type (air stone), installed in the base of the air bubble combination component 3, while varying that depth (AL) from the water surface SW, to 20cm and 30cm, and also varying the distance (BL) from the water surface to the air bubble exposure component 5, to 10cm, 12, and 14cm respectively.
Furthermore, the interval K between the walls of the air bubble progression passage 4 is 15mm, the blower delivering air to the spraying component 2 is a SECOH Model DF-406, with a power consumption of 45W.
From the aforementioned Figure 8, it is possible to understand that the deeper from the water surface the air bubble generation location (spraying component 2), the greater the treated water 2W recovered from the liquid bubble exposure component 5.
This is due to the fact that the buoyancy of bubble generated in a deep location is accelerated, and by colliding with the mass of air bubble collected at inside the air bubble combination component 3, increasing its buoyancy, increasing the number of air bubble particles that rise into the air bubble progression passage 4, and as a result the quantity of treated water 2W that overflows from the liquid bubble exposure component 5 is increased.

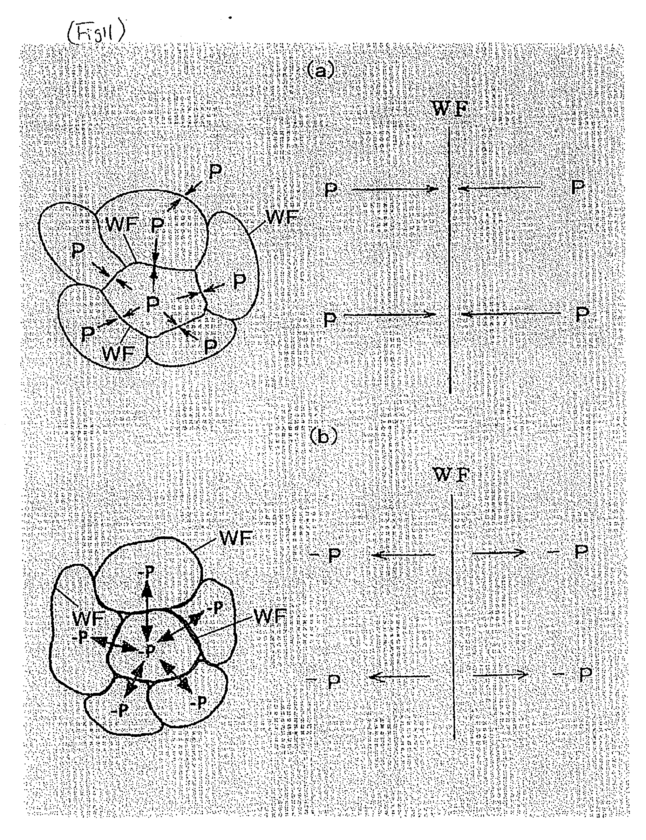

The values of liquid bubble generation aeration dissolved oxygen in Figure 9 are shown in a table, measurements are taken of the dissolved oxygen in tap water with a TOA-DKK model D021 P dissolved oxygen meter, while de-aerated initial standard water of 2.80ppm is created, operation occurs with the water depth (AL) from the water surface S.W to the spraying component 2 from table 8 above, fixed to 20cm, the distance (BE) from the liquid bubble exposure component to the water surface, fixed to 10cm, measurements are taken every minute of the DO of 10.2L of treated water that overflows from the liquid bubble exposure component 5; the total treated water after 4 minutes 40.8L and the total dissolved oxygen are also shown.
The other underwater spraying aeration dissolved oxygen value is measured with 10.21, of standard de-aerated water (DO 2.9ppm) put into a vessel (a 20cm interior diameter, 38cm high, cylindrical vessel), using the same blower, same spraying component 2 (air stone) as in the above liquid bubble aeration method, spraying underwater at a depth of 20cm from the water surface inside the vessel, every minute on the minute for 4 minutes.
By measuring the total dissolved oxygen and treated water quantities in this way, it is possible to compare the energy efficiency of the two methods.
From figure 9 above, the dissolved oxygen for 1 minute of liquid bubble generation aeration is an increase of 8.05-2.9=5.25 ppm, the total quantity for 4 minutes is 5.25ppm x 4, an increase of 21.Oppm, the dissolved oxygen for 4 minutes of continuous spraying in 10.2L of de-aerated water, with underwater spraying aeration, is an increase of 8.41-2.80=5.61 ppm. Also, it can be said that the dissolved oxygen increase (8.05ppm) of the treated water treated by the liquid bubble generation aeration method is comparable to nearly 2 minutes of the underwater spraying aeration (8.11 ppm), and even looking at the calculated total dissolved oxygen increase and the total quantity of water treated over 4 minutes, the liquid bubble generation aeration method is superior.
Also, with regards to the oxygen dissolving efficiency of the underwater spraying aeration, the rise in the DO value at 3 minutes and 4 minutes was minute, and it is apparent that with treated water that approaches the saturation point of dissolved oxygen, it is not energy efficient or economical. Furthermore, the DO value of the tap water prior to de-aeration is (dissolved oxygen concentration) is 9.3ppm, and the water temperature was 18.2 degrees C.
Also, in a different experiment to that above, with a low energy consumption GX Model GX400N aquarium use air pump, and a small air stone installed 30 cm from the bottom of the liquid bubble combination component 3 (water surface) generating air bubbles, and changing the distance from the water surface of S.W to the liquid bubble exposure component 5 for the length of the air bubble progression passage 4 (a single 12mm diameter pipe), the experiment results where that 0.9L of treated water were obtained every minute. However, the distance from the water surface to the liquid bubble progression passage was approximately 3cm.
The energy consumption of this air pump was 1.8W, 1/25 of the above blower, and while the quantity of treated liquid for the same power consumption is greater than that of the above blower, since the height it rises above the water surface is lower, the pellicular water liquid bubble membrane is thicker.
Below is a detailed explanation of the second realization of the form of the aeration system in this invention, with references to the below figures.

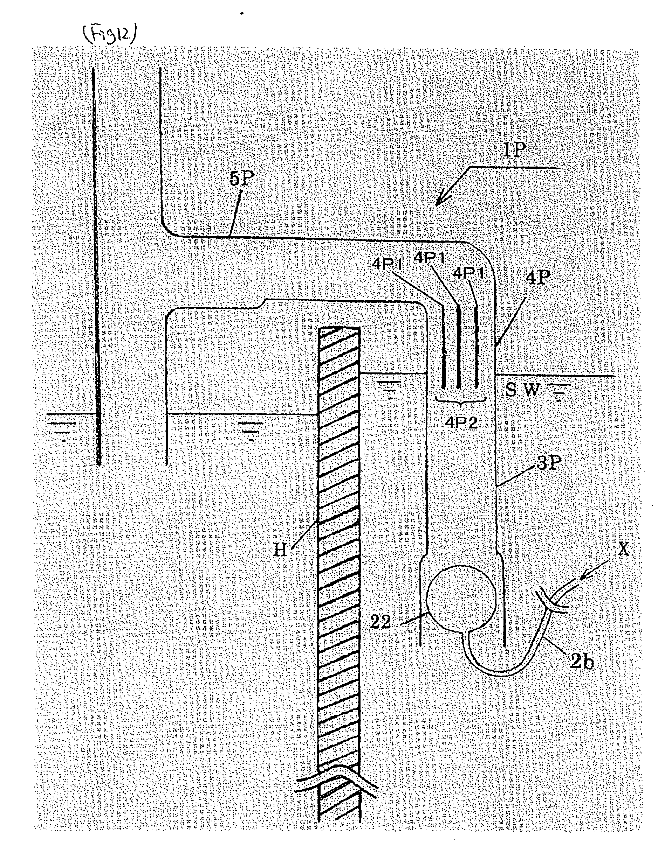

Figure 10 is a frontal diagram of aeration system that is the second realization of form of this invention

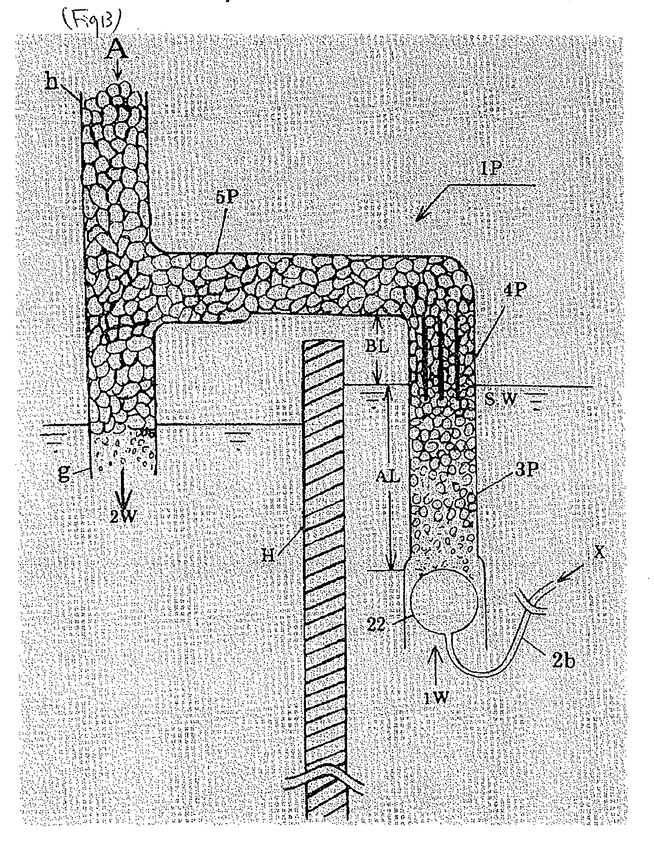

In figure 10, 11 is the aeration system stated in Claim 6 of this invention, 12 is the tank that can withstand increasing pressure and decompression, 12a is the discharge control valve that controls the discharge of treated water 2W inside tank 12, 12b is the decompression valve that is opened when the tank 12 is set to a decompressed state, 12c, is the recovery valve that is opened to recover de-aerated water from inside the tank 12, 12d is a pressure sensor that can know the pressure inside the tank 12 and electronically transmit it to all the valves, the pump etc., 12e is an excess gas discharge valve that allows for example, with regards to oxygen solubility, the ability to increase the gas oxygen solubility by allowing the removal of excess built up nitrogen etc, in the tank, 13 is a supply pump that supplies untreated water 1 W to the tank 12, 13 a is an intake tube that intakes untreated water 1W when supply pump 13 is operating, 13 b, is a self-priming air quantity control valve, that self-primes the air by using the negative pressure generated by the intake tube, and controls the quantity of the self primed air, 13c is the supply valve that is opened after operation, 13d is a self--priming liquid control valve that controls the quantity of untreated water 1 W taken in by the tank 12, when the tank 12 is in a decompressed state, 14 is a supply pipe that supplies untreated water 1 W to the tank 12, 15, is a liquid bubble generation vessel that generates liquid bubbles from the untreated water 1 W, 16 is an air pump that intakes gas x (under pressure or decompression) from inside the tank 12 through an air an air intake tube 16a, passes it through an air supply tube 16b, and supplies it to the spraying component 2 installed at the base of the air bubble generation vessel, 17 is a receiving plate tube that can catch the treated water that overflows from the top of the liquid bubble generation vessel 15, and deliver it to the bottom of the liquid bubble generation vessel 15, 18, is a vacuum pump that can remove gas from inside the tank 12 and set it to a decompressed state, 19 is a recovery pump that can recover de-aerated treated water when the tank 12 is in a decompressed state, 20 is a water level sensor that can detect the water level of the treated water 2W temporarily stored at the bottom of the tank 12, and electrically transmit that water level information to all the valves, pumps etc., allowing for optimal operation.
Furthermore, the tank 12 in this aeration system can operate at increasing pressure or decompression, it is possible to sufficiently dissolve the gas into the liquid bubble membrane pellicular water without the liquid bubble exposure component 5, with appropriate pressure, also, it is possible to sufficiently de-aerate the liquid bubble membrane pellicular water with appropriate decompression.

The following is an explanation of the operating method of the aeration system 11 in the second realization of the form.
This aeration system can dissolve gas to a high concentration in liquid, and also de-aerate existing gas dissolved in a liquid, however for purposes of simpler understanding, they are explained separately.
Firstly, the method of dissolving gas to a high concentration in liquid will be explained using figure 10. Furthermore, all the valves stated within figure 10 will start off closed.
First, operate pump 13, then by opening the supply valve 13C and in taking untreated water from intake tube 13a, and since the end of supply pipe 14 bends towards the center of the air bubble progression passage 14 as seen in the figure, untreated water 1W is supplied to the liquid bubble generation vessel 15.
At this time, using the negative pressure generated in the intake tube 13a, an appropriate quantity of setup gas X is automatically sucked in by self-priming air quantity control valve 13b, and an air-liquid mixture is supplied to tank 12.
By continuously supplying the air liquid mixture to tank 12, the pressure inside tank 12 gradually rises.
For example, by operating with discharge control valve 12a closed, when the desired predetermined gas pressure setting in the tank 12 is 0.2 MPa, the water level of treated water 2W inside tank 12 is around 2/3, when 0.1 MPa, roughly 1/2.

When operated in this fashion, since the water level inside tank 12 becomes high, detailed information is sent from the pressure sensor 12d to the discharge control valve 12a, and from the time that the pressure in the tank is below the predetermined setting, treated water 2W is gradually discharged from the tank 12, and gas is automatically supplied by self-priming air quantity control valve 13b, making it possible to decrease water level, and also, gradually the pressure inside the tank can approach that of the setting pressure.
As a result, until the water level sensor 20 detects the lower water level limit Z, gas will be automatically supplied by self-priming air quantity control valve 13b. For example, in order to quickly drop the water level inside the tank 12 to the lower water level limit Z, it is possible operate with a compressor at startup to quickly achieve the desired set pressure inside the tank and quickly operate normally.
The instant that the water level sensor 20 detects the lower water level limit Z, that information is sent by electrical signal to the self priming air quantity control valve 13b, and the self priming is stopped. In this fashion, without supplying new gas to tank 12, the gas X inside tank 12 is gradually dissolved, and the water level of the treated water inside tank 12 gradually rises.
The instant that the water level rises and is detected by the water level sensor 20's upper water level limit Y, the automatic supply of gas to tank 12 by self-priming gas quantity control valve 13b starts again. By alternating these operations repeatedly it is possible to continuously operate.
Next, air pump 16 is operated, and by generating air bubble particles from the spraying component installed in the bottom of the liquid bubble generation vessel 15, those air bubble particles rise up from the outer circumference of the air bubble progression passage 4 and at the top, are converted into liquid bubbles, making it possible to turn untreated water 1W into the liquid bubble membrane pellicular water WF.

As for the liquid bubble generation method inside the liquid bubble generation vessel 15, it is almost identical to that of the first realization of the form of the aeration device 1, however since high pressure gas X is used to generate air bubble particles from the spraying component 2, naturally, the air pressure inside the generated liquid bubbles is high, and as shown in the schematic of diagram 11 a the liquid bubbles are gathered into a mass, and the gas instantly dissolves in into the liquid bubble membrane pellicular water in response to the pressure P, and overflow from the top of the liquid bubble generation vessel 15, and by receiving plate tube 17 are delivered to the liquid bubble generation vessel installed at the bottom again and again, also, since the liquid bubble generation vessel is installed at the bottom, treated water 2W can several times be repeatedly turned into liquid bubble pellicular water WF, even when air is difficult to dissolve, or the liquid is in a poor state for dissolving, high concentration gas solubility is possible.
Also, for example, when dissolving comparatively easy to dissolve gas, when compared to air, such as pure oxygen etc., since the nitrogen gas originally dissolved in the untreated water will emanate into the tank 12, gradually the dissolved oxygen concentration in recovered treated water 2W will drop. At this time, using a sensor or a timer, by intermittently removing built up nitrogen from inside tank 12, by the discharge valve 12e, it is possible to increase the dissolved oxygen concentration.

Next, a method of dc-aerating existing dissolved gas from a liquid using this aeration system will be explained using figure 10.
Firstly, by opening decompression valve 12b, and operating vacuum pump 18, the air inside tank 12 is removed, when the pressure sensor 12d detects the desired decompression, by controlling the quantity of untreated water 1 W automatically taken by the self-priming liquid control valve 13d, an appropriate quanity of untreated water 1 W is taken in by tank 12, and since the end of supply pipe 14 bends towards the center of the air bubble progression passage 14 as seen in the figure, untreated water 1 W is supplied to the liquid bubble generation vessel 15.
Also, at this instant, by operating air pump 16, it is possible to generate air bubble particles with the decompressed gas X at the bottom of liquid bubble generation vessel, those air bubble particles rise up from the outer circumference of the air bubble progression passage 4 and at the top, are converted into liquid bubbles, as shown in the schematic of diagram 11 b, the liquid bubbles are gathered into a mass, and the gas dissolved in the liquid bubble membrane pellicular water emanates to the space of negative pressure -P inside the liquid bubble, making it possible to de-aerate untreated water 1W.
Also, treated water 2W that is de-aerated in this fashion, just as when making the high concentration dissolved gas liquid above, by using receiving plate tube 17 to deliver gas to the liquid bubble generation vessel at the bottom, again and again, it is possible to repeatedly turn the treated water 2W into the liquid bubble membrane pellicular water WF, even when departing a difficult to de-aerate dissolved gas, or a gas is difficult to discharge from the liquid, a high degree of de-aeration is possible.
By repeatedly using tank 12 in a decompressed state, it is possible to minimize energy waste for de-aeration, and it is also possible to easily recover gas X that was de-aerated from vacuum pump 18.
The instant the water level of treated water 2W accumulated inside the tank 12 is detected by the water level sensor upper water level limit Y, after the recovery pump 19 is started, by opening the recovery valve 12c, the treated water inside tank 12 is recovered, and the instant that the water level is detected by the lower water level limit Z, the recovery valve 12c is closed, and recovery pump 19 stopped.
By repeating this operation, it is possible to either recover the accumulated treated water 2W from inside the tank 2, or also continuously operate by continuously controlling, the quantity of untreated water taken in by the liquid bubble generation vessel from the control of the self-priming liquid quantity control valve 13d and the quantity recovered from the recovery pump 19, with detection of the water level inside the tank 12 by the water level sensor 20.
Also, when the quantity taken in by the self-priming liquid quantity control valve is small, it is fine to control the quantity of untreated water supplied, by starting pump 13 and controlling supply valve 13c.

Following is the detailed explanation of the 3rd realization form of this invention of an aeration system by using fig from 11 to 15.

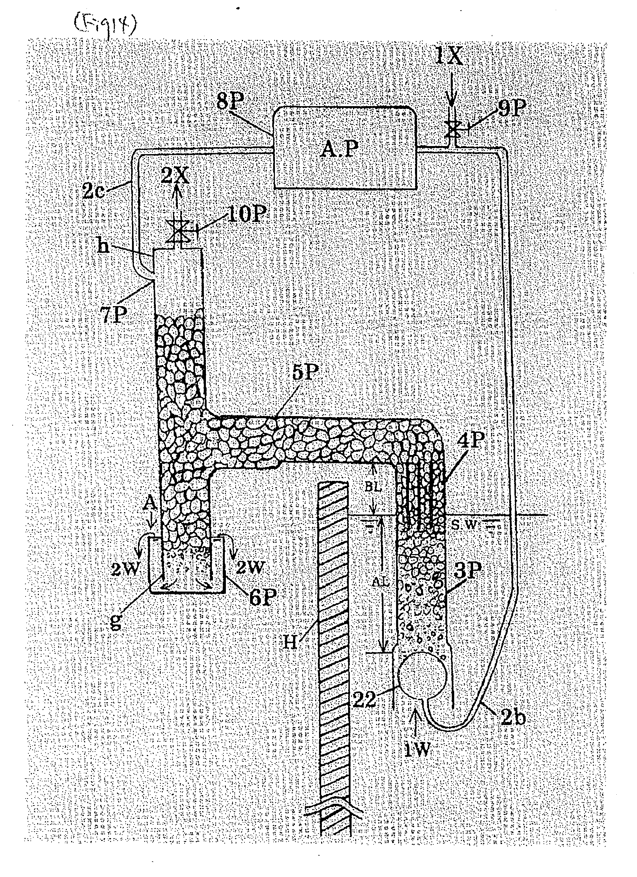

Fig 12 is frontal cross-section view of the 3rd realization form of this invention.

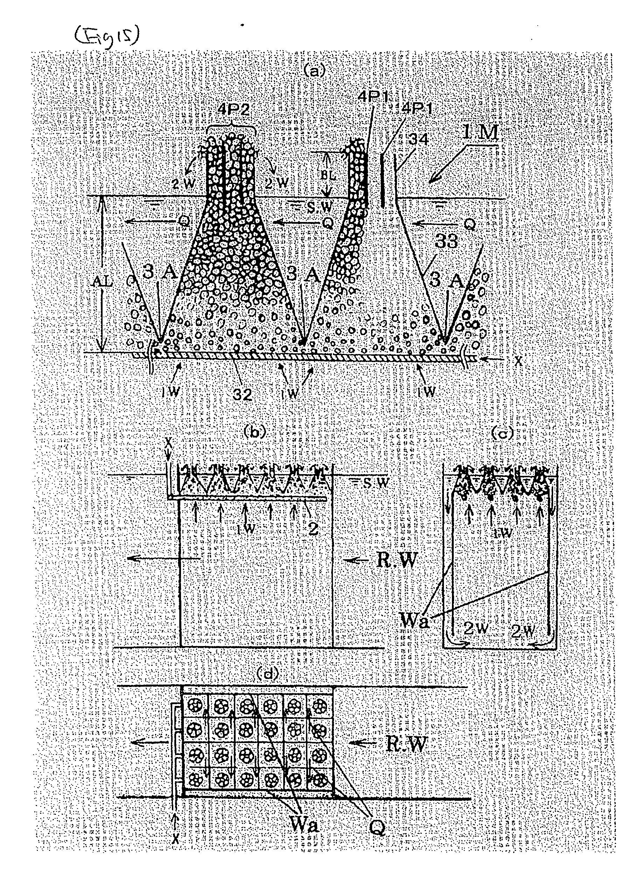

Fig 13 is the model illustration of a system when turns on the air pump, supplies gas X to the gas spraying component 22 and generates air bubble particles and liquid bubbles and then transfers treated water 2W to other tanks.
In Fig 13, 1 P is the aeration system of the first realization form of this invention. 22 is the gas spraying component such as air stone etc. 2b is the air supply tube that supplies pressurized air to the gas spraying component 22. 3P is the cylindrical air bubble progression component wherein the air bubbles generated by the air spraying component 22 progresses. 4P is the air bubble progression passage that lifts the air bubble generated by the air spraying component 22 above the water surface S.W and turns into liquid bubbles. 5P is the liquid bubble transfer component that maintains the liquid bubble status and transfers to other locations. H is the tank partition wall. Fig 13 explains the operation method of the aeration system 1 P of the 3rd realization form of this invention.
First, generates continuously air bubble particles inside the air bubble progression component 3P by supplying pressurized gas X through the air supply tube 2b to the gas spraying component 22 which is arranged in the untreated water 1 W about 20-60 cm deep. On the top of the cylindrical air bubble progression component 3P (in the actual test, Vinyl Chloride tube with diameter 40mm is used), connecting an air bubble progression passage 4P that is with pipe shaped part 4P2 which is made by bundling multiple pipes 4P1 with inner diameter of 5-20mm and height of 30--100mm (in actual test, diameter 13mm and height 70mm Vinyl Chloride tube is used.) When continuously generating air bubbles inside the air bubble progression component 3P and the air bubbles progress and when it progresses inside the air bubble progression passage 4P, the water around the air bubble will separate to the bottom due to the gravity and on the top of the air bubble progression passage 4P, it turns into soap bubble slump (in Fig 1 (a) of the model illustration of the liquid bubble mass, P is air pressure, Right side is the enlarged Fig and WF is the surface liquid file of the liquid bubble.)
Also, at this moment, when the BL distance between the water surface and the top of the air bubble progression passage 4P is longer, the passed liquid bubble volume (treated Volume) through the liquid bubble transfer component 5P will become less, if it is shorter, then the liquid bubble volume will larger. Moreover, when the AL distance between air spraying component 22 and the water surface S.W is longer, then the buoyancy energy that lifts the air bubbles will bigger. When it is shorter, the buoyancy energy will be less.
The liquid bubble transfer component 5P is with top and bottom openings in order to maintain the liquid bubble status generated from the top of the air bubble progression passage 4P as long as possible. On the top opening h, it receives atmospheric pressure A and for the bottom opening, let is soak in the water and gives a relatively weak water pressure on it according to the liquid bubble status inside the liquid bubble transfer component 5P, the liquid bubbles will drop from the top opening h to bottom opening g due to liquid bubble's gravity and when it arrives around the bottom opening g, the surface water around the liquid bubble will break and turns into treated water 2W.
For the test, off-shelf air stone is used for the gas spraying component 22, AL is about 20-30cm and is proper for air bubble particles generation. Due to different manufacturers of gas spraying component 22, it varies of the size and volume of generated air bubble particles and also due to different gas X supplier---- an air pump or a blower etc.
For example, for plants and animals cells cultivation, it needs to keep the AL distance between the water surface and the gas spraying component shorter and generated air bubble particles as soft as possible in order not to impact the cells.
Also, for fish, shell fish nurseries, it needs larger volume of air bubble particles from gas spraying component in a relatively short time. So scales the system up or generating more air bubble particles from the air spraying component, or make the distance between the water surface and the air spraying component longer to increase the air bubbles buoyancy energy. In case of the untreated water with many pollutants, then it is better to place a web etc. as the strainer around the gas spraying component or the untreated water suction hole. Also, by connecting a pipe or hose to the bottom of the air bubble progression component 3P, it will draw deeper untreated water 1W and also by connecting a pipe or hose to the bottom opening g, it can transfer treated water 2W to much deeper area.

For the 4th realization form of this invention of an aeration system, it is explained in details by reference to the following Figs.
Fig 14 is the model illustration of the motion of air bubble s and liquid bubbles when the 4^{th} realization form of this invention of an aeration system is in operation. 1 W is untreated water, 22 is gas spraying component, 2b is the gas supply tube, 3P is the gas bubble progression component, 4P is the gas bubble progression passage. These components are exact the same as the Fig 12 of the 3rd realization form of this invention of an aeration system.
Compared with the 3^{rd} realization form of this invention, the difference is as follow: The design to prevent the air in the liquid bubble leaking from the liquid bubble transfer component 5P when the liquid bubble arrives around the bottom opening g and breaks by arranging an air suction hole 7P on the top of the liquid bubble transfer component 5P and an air volume adjust valve 10P.
By adding some pressure on the liquid bubble transfer component 5P, it makes better liquid bubble generation with a liquid bubble receiving plate 6P.
First, turns on the air pump / air blower 8P and supplies gas 1X which is with manufacturing cost such as oxygen or hydrogen gas etc. though the air supply valve 9P, and generates liquid bubbles inside the liquid bubble transfer component 5P.
At this moment, since there is some gas 1X that is unable to dissolve into the treated water 2W will converge around the top opening h. By arranging an air suction tube 2c between air suction hole 7P and the air pump / blower, it is possible to recycle the undissolved gas with the newly supplied gas 1X from the air supply valve 9P, Also, by adjusting the air volume adjust valve 1OP that is arranged on the top opening h and letting it discharge some gas 2X from the supplied gas 1X through gas supply valve 9P, it is possible to adjust the inner pressure of the liquid bubble transfer component 5P. Moreover, the liquid bubble receiving plate 6P has not to be plate shape. It can he any shaped vessel.

Next, for the 5th realization form of this invention of an aeration system, it is explained in details by reference to the following Figs.
Fig15 (a) is the frontal cross-section view of the 5th realization form of this invention of an aeration system. In Fig15 (a), it shows an aeration device 1 M by connecting multiple individual aeration devices base 3a without any gas between each other. Now each individual aeration device composes following:
a) An air spraying component 32 that generates air bubble particle when supply air into the depth AL about 20-60cm.
b) An air bubble combination component 33 with square spindle shape to collect the aforesaid air bubble particles at the top area,
c) An air bubble progression passage 34 made from bundled pipes which are arranged on the top of the air bubble combination component 33 with diameter 10-20mm and at the height of 30-100mm.
Fig 15(b) is a frontal cross-section view of the system when arrange the aeration system 1 M on the top area of the water surface of an aeration tank in a sewage disposal plane etc. and supply gas X into the gas spraying component 32 by an air pump or blower. R.W is the flow direction of the sewage disposal plant.
Fig 15(c) is the lateral cross-section view of the Fig15 (b). It shows:
a) an air spraying component 32 in the untreated water 1W generating air bubble particles.
b) the untreated water turns into liquid bubble film and overflows from the air bubble
   progression passage 34 as oxygen riched treated water 2W.
c)the treated water 2W falls along the guide wall Wa and is transferred to the oxygen deficient bottom area as flow Q.
And Fig15 (d) is the elevation of Fig15 (b).
It is possible to adjust the AL distance according to the untreated water 1 W types, viscosity and daily volume. The longer it is, the bigger of the air bubbles buoyancy and the more it can treat. Also, compared to general existing aeration systems, by only changing into liquid bubbles, it can increase oxygen dissolve efficiency. So even drops the dissolve efficiency a little bit by sorting BL distance, it will increase the treatment volume a lot.

By setting the test system as following:
1) use the 3rd realization form of this invention of an aeration system 1 P
2) the inner diameter of the air bubble progression component 3P in the Fig 12 as 40min
3) inside the air bubble progression passage 4P, arranging 4, diameter at 13mm pipes as bundle.
4) AL distance as 20cm
5) BL distance as 5cm
6) Use YOPORO Industries manufactured type LL40, 36W Blower
and supplying pressurized air to the gas spraying component 22, it can generate liquid bubble in the liquid bubble transfer component 5P, and with 10.3L/ M air flow from the bottom opening g and generates well aerated treated water 2W.

Moreover, by setting the test system as following:
1) using same type of air progression component 3P and air bubble progression passage 4P as the 3^{rd} realization form of this invention of an aeration system 1 P
2) also setting same AL & BL distance
3) Arranging a liquid bubble receiving plate 6P on the bottom opening g of the liquid bubble transfer component 5P
4) Arranging air suction hole 7P on the top opening h and air volume adjust valve 10P
And thus making it same as the Fig 12's 4th realization form of this invention of an aeration system, and supplying pure oxygen as gas 1X from the air supply valve 9P and let it run. In the test, the untreated water is tap water with 17.2 degree temperature and DO 9.25ppm. After running the system, as the test result, the treated water 2W overflowed from the liquid bubble receiving plate 6P is high oxygen concentrated water with 10.3L l/M flow and DO 37.5ppm.

### Possibility for industrial applications

1) By only changing the gas bubbles that is generated from the existing aeration system in an existing waste water treatment plant into liquid bubble, it can improve the waste water treatment efficiency since it is able to supply oxygen into the waste water more efficiently and thus activate the microorganisms in the waste water, meanwhile it still keeps utilizing the existing equipments and thus realizes economical goal as well.
2) Oxygen supply into a closed water area in the sea or a lake, or into nurseries for fish or shellfish etc. and Disposal or recycle the floatation matters such as fish bait residue, excrement etc. around the bottom area or in the water.
3) Oxygen supply and fish bait residue, excrement floatation's disposal in a aqua water tank.
4) Floatation's disposal in the industrial circulating water.
5) Production of high density air dissolved water or de-aired water
6) Production of various types of functional water by applying high density gas dissolve process and de-aeration process together. For example: By de-aerating the existing dissolved gases from the to-be treated water and then dissolve the desirable gases into the to-be treated water, it will produce different types of functional water with special effects.
7) Applies for high efficient gas dissolve effect by turning liquid into liquid film and pump effect due to its capability to transfer the water to other places.
8) Applies for aeration devices for high efficient oxygenation in a sewage disposal plant.
9) De-aerating the residue ozone from the ozonized water.

## Claims

1. An aeration method features and composes following processes:
a) A gas spraying process that generates gas bubble particles in a liquid
b) A gas bubble convergence process that forms the gas bubbles groups (3a) by converging the gas bubbles (2a) around the bottom area under the water surface (S.W) when the aforesaid gas bubble rises to the water surface
c) A liquid bubble generation process that turns the gas bubbles into liquid bubble (similar to soap bubbles lump) around the top area of the aforesaid gas bubble's rising path. Since when arranges an gas bubble rising path on the surface portion of the aforesaid gas bubbles groups (3a), the liquid around the gas bubble will fall and separate to the bottom due to gravity when it is pushed up in the aforesaid gas bubble rising path (4) from the aforesaid gas bubbles groups (3a) top portion which is caused by the buoyancy of the aforesaid gas bubbles groups (3a). The gas bubbles groups (3a) is increased by the continuously generation of the gas bubble (2a) from the aforesaid gas bubble spraying process
d) A liquid bubble exposure process that keeps the liquid bubble status on the utmost top of the aforesaid gas bubble rising path as long as possible.

2. An aeration device features and composes following portions:
a) A gas spraying portion that generates gas bubbles in the to-be treated water (1W),
b) A gas bubble convergence portion that forms the gas bubbles groups (3a) by convergingthe gas bubbles (2a) under the water surface (S.W) of the to-be treated water (1W),
c) A gas bubble rising passage that turns the gas bubbles (2a) into liquid bubble (4a) when the aforesaid gas bubble groups (3a)'s top portion is pushed up above the water surface by the continuously increasing gas bubbles (2a)'s buoyancy,
d) A liquid bubble exposure portion (5) that keeps the liquid bubble status on the utmost top of the aforesaid gas bubble rising passage as long as possible.

3. An aeration device that is claimed in the claim 2 is able to push the lower level water (1W) up to high level of the to-be treated water due to gas lift effect by arranging a passage (7) on direction of from lower level to higher level of the to-be treated water (1W) and meanwhile arranging the aforesaid gas spraying portion (2a) on the top portion of the passage (7) to generate gas bubbles (2a), and also able to change the to-be treated water (1W) into liquid film on the liquid bubble's surface under atmospheric pressure.

4. An aeration device that is claimed in claim 2 is able to send the oxygen rich, after-treatment water (2W) into lower water level area by connecting the after-treatment water (2W) that is discharged from the aforesaid liquid bubble exposure portion (5), in case the exposure portion is located higher than the water surface, to the connection channel (80 which is arranged deep into the lower water level by utilizing the different head.

5. An aeration system composes following:
a) An aeration device that is claimed in claim 2 and is installed above the water surface,
b) A fine gas bubble generator (M) that is arranged on the bottom of the aforesaid aeration device,
c) A receiver (6) that is able to take the after-treatment water (2W) and transfer it to other places for next treatment process.

6. An aeration system that composes following:
a) A tank (12) that is capable to bear both compression and decompression status,
b) A pump (13) that is able to supply to-be treated water (1W) and gas (X) into the aforesaid tank when the tank (12) is under compression or decompression status,
c) A liquid bubble generation container (15) that is able to turn the to-be treated water (1W)into liquid bubbles,
d) A gas pump (16) that is able to suck the gas from the compressed or decompressed thank (12) and pump it to the gas spraying part (2) which is arranged at the bottom of the aforesaid liquid bubble generation container (15),
e) A receiver tube (17) that is able to take the overflowing treated water (2W) from the upper aforesaid liquid bubble generation container (15) and transfer it to the lower aforesaid liquid bubble generation container (15) when arrange multistage of the aforesaid liquid bubble generation containers (150 vertically.

7. An aeration device that composes following:
a) A gas spraying part (22) that generates gas bubbles when supplies pressurized gas into the to-be treated water (1W) by using an gas pump or a blower (8p),
b) A gas rising part (3P) inside which that gas bubbles rise when arranging the aforesaid gas spraying part (22) in a cylindrical part,
c) A gas rising passage (4p) that is able to turn the to-be treated water (1W) into a liquid film by changing the gas bubble groups into liquid bubble groups (similar to soap bubble's lump).; the aforesaid gas bubble groups are pushed up above the water level due to the increasing gas bubble's buoyancy by arranging the connection tube (4p1) into multi-bundled tubes (4p2) on the top of the aforesaid gas rising part (3a),
d) A liquid bubble transfer part (5p) that is able to transfer the liquid bubble while maintain the liquid bubble status.

8. An aeration device that composes following items:
a) A gas sucking hole (7p) for an gas pump or a blower to suck and circulate the inner gas by closing the top open mouth (h) of the aforesaid liquid bubble transfer part (5) claimed in Claim 7,
b) A gas volume adjustment valve (10p) that is able to adjust the pressure inside the aeration device,
c) A liquid bubble receiver (6p) that is able to take the aforesaid liquid bubble when it arrives and collapses at the bottom opening (g) of the aforesaid liquid bubble transfer part (5p).

9. An aeration system with application for waste water treatment etc. that composes following items:
a) A bundled aeration device that connects several individual aeration devices together without any gap between any two of the conical aforesaid gas bubble converging part (33)'s bottom, an individual aeration device composes:
(i) a gas spraying part (32) that generates gas bubbles in the liquid close to the water surface (S.W);
(ii) a conical gas bubble converging part (33) that converges the aforesaid gas bubbles around the top area;
(iii) a gas rising passage (34) that is able to turn the to-be treated water (1W) into liquid film by changing the gas bubble groups into liquid bubble groups. The aforesaid gas bubble groups are pushed up above the water level due to the increasing gas bubble's buoyancy by arranging the connection tube (4pl) into multi-bundled tubes (4p2) on the top of the aforesaid gas rising part (3a).
b) Guide wall (Wa) that is able to transfer the after-treatment water (2W) overflowing from the aforesaid bundled aeration device to the bottom area of the aforesaid waste water treatment plant etc. by utilizing the head difference.
